# EUROPEAN PATENT APPLICATION

(11) **EP 1 522 980 A1**
(43) Date of publication of application: **13.04.2005**
(21) Application number: 04252651.7
(22) Date of filing: 06.05.2004
(51) Int. Cl.: G07F 19/00

(54) **An enclosure for an automated teller machine**

(30) Priority: 09.10.2003 GB 0323705; 10.03.2004 GB 0405444
(71) Applicant: Acketts Group Limited, Billericay, Essex CM12 0BT (GB)
(72) Inventor: Taverner, Alistair, Burnham on Crouch CM0 8QQ Essex (GB)
(74) Representative: Luckhurst, Anthony Henry William

(57) **Abstract**

An enclosure 35 for an automated teller machine (A.T.M.) 1 comprises a first wall 11 and a second wall 21 which are each mounted on the A.T.M. 1 by hinges 23, 31. When the walls 11, 21 are fully opened they meet along a common edge 33 to form a secure enclosure 35 in which bank notes can be loaded into the A.T.M. 1. The walls 11,21 are retracted to lie flush with the housing 3 of the A.T.M. 1. By installing the A.T.M. at the site of a public telephone, use can be made of the available paper supply and communication link.

## Description

The present invention relates to an enclosure for an automated teller machine (A.T.M.) to be used when bank notes are loaded into the A.T.M., and retractable thereafter. The present invention further relates to a method of installing A.T.M.s. It also relates to apparatus for and a method of transferring a case cassette securely through a wall.

A.T.M.s are typically mounted in the wall of a building, or are free standing within a bank or a shop. The number of A.T.M.s has grown over recent years, fuelled by a consumer demand for convenient access to cash. Furthermore, the increased popularity of telephone and internet banking have reduced the importance of high street bank branches and led to the closure of many such branches, this in turn has led to a proliferation of A.T.M.s.

There are a number of challenges facing those wishing to install new A.T.M.s. To operate, an A.T.M. requires an electricity supply and a data communications link. Providing these services to the site of an A.T.M. may require significant outlay, greatly increasing the cost of installation. In addition, the investment in providing and installing an A.T.M. is great and it is important to maximise its usage to justify the outlay required. Hence, many A.T.M.s are now sited in retail outlets such as department stores and more recently convenience stores. However, these locations provide access only during shop opening hours.

Therefore, it is an object of the present invention to provide a method of planning and installing an A.T.M. to meet the challenges outlined above.

A first aspect of the present invention provides a method of installing an A.T.M. comprising locating a public telephone site having a power supply and communication link and installing the A.T.M. at the site. The A.T.M. can use the power supply and communication link.

We have realised that public telephones located in open spaces such as a sidewalk or pavement have a power supply, usually providing lighting, and a data communication link - the telephone line and so greatly facilitate the installation of an A.T.M.

Space may be limited at the site, and in a particularly preferred embodiment we replace the public telephone box or kiosk with an A.T.M. kiosk. So that no loss of public service results, we particularly prefer to provide a public telephone on the A.T.M. kiosk.

A.T.M.s hold large amounts of cash and so they are attractive targets for criminals and therefore security considerations are paramount.
Bank notes are stored in trays in the A.T.M. The compartment is securely locked shut in normal use, and are only accessed when the supply of bank notes is periodically replenished. Access is also provided to allow maintenance of the A.T.M., particularly the note handling mechanism.

When replenishing the supply of bank notes in an A.T.M., it is critical that the operative filling the A.T.M. has secure access to the bank note compartment, to prevent theft of bank notes or attack to the individual filling the A.T.M. This has generally been achieved by installing the A.T.M. in a building wall and providing rear access within the building, or siting the A.T.M. completely within a building as noted above.

It is a further object of the present invention to provide a secure enclosure for an A.T.M. to be used when replenishing the supply of bank notes in the A.T.M.

EP-A- 724 239 and FR-A- 2 721 055 provide an telescoping enclosures which allows access to the rear of the machine. US-A- 5 222 445 provides an enclosure which expands sideways using a bi-fold door. The difficulty with these arrangements is the space taken up by the enclosure, particularly when opened out. When installing an A.T.M. in lace of a telephone kiosk, space around the kiosk is often very limited.

Thus, another aspect of the invention provides an enclosure for an automated teller machine (A.T.M.), the enclosure being expandable to enclose a work space in front of the A.T.M.

By creating the workspace in front of the A.T.M. we make use of the area which is normally available for users of the A.T.M. machine.

The enclosure may comprise a wall which is mounted on for movement between a first position adjacent a front of the A.T.M. to a second position spaced from the A.T.M. Preferably the wall is pivotably mounted to pivot about a vertical axis to one side of the A.T.M. The wall may comprise two panels connected to form an L shape, a first panel adjacent the vertical pivot overlaying a front of the A.T.,M. when in the enclosed position and the second panel laying along one side of the A,.T.M. A second wall is positioned between the second panel and the A.T.M. and is also pivotably mounted to pivot outwards and form the enclosure in front of the A.T.M. It will be appreciated that a panels may also be mounted to slide linearly outwards.

A further object is to facilitate the secure transfer of a cash cassette through a wall, for example to allow an operative, working within a secure ATM enclosure embodying the first invention, to be delivered with cash cassettes from outside, so that he may load them into the ATM whilst protected by the enclosure.

Accordingly, a further invention provides a cash transfer unit for use in a vertical wall for the secure manual transfer of a cash cassette through the wall between operatives inside and outside the wall, comprising a secure enclosure mountable on the wall interior around an opening in the wall, to prevent access through the opening; and a flap mounted over an access aperture in the enclosure, the flap being pivotable from the outside about an edge of the access aperture between an open position, allowing the cash cassette to be received through the access aperture, and a closed position at which it closes the access aperture.

A corresponding enclosure may have the features of the first invention described above, the cash transfer unit being fitted with its secure enclosure around the wall opening on the inside so that the flap is accessible from the outside. Such an enclosure is used by pulling the flap open, loading the cash cassette through the access aperture, and closing the flap.

Other aspects and preferred features of the invention will be apparent from the following description and the accompanying claims.

The invention will be further described by way of example with reference to the accompanying drawings in which:
Figure 1 is a perspective view of a free standing A.T.M..
Figure 2 is a perspective view of the A.T.M. of Figure 1 with a first movable wall in its open position.
Figure 3 is a perspective view of the A.T.M. of Figure 1 with a second movable wall in a partially open position.
Figure 4 is a perspective view of the A.T.M. of Figure 1 with the second movable wall in the fully open position, forming a secure enclosure in which the person replenishing the bank notes can stand.
Figures 5a, b & c are perspective views of an embodiment of the invention, showing an A.T.M. in combination with a public telephone.
Figure 6 is a plan view of the embodiment of figure 5 with the first and second walls in different positions.
Figure 7a is a perspective view from the rear of a cash transfer unit embodying the invention and fitted to a vertical wall of a kiosk;
Figure 7b is a perspective view from the front of the cash transfer unit of Figure 7a, seen through an opening in the vertical wall of the kiosk, with the flap closed;
Figure 7c is a side elevation of the cash transfer unit of Figures 7a and 7b, again with the flap closed;
Figure 7d is a rear elevation of the cash transfer unit of Figures 7a to 7c;
Figures 8a to 8c are views corresponding respectively to Figures 7a to 7c, but with the flap open;
Figures 9a to 9c are views corresponding respectively to Figures 7a, 7d and 7c, but with the hood partly raised;
Figures 10a to 10c are views corresponding to Figures 9a to 9c respectively, but with the hood fully raised.

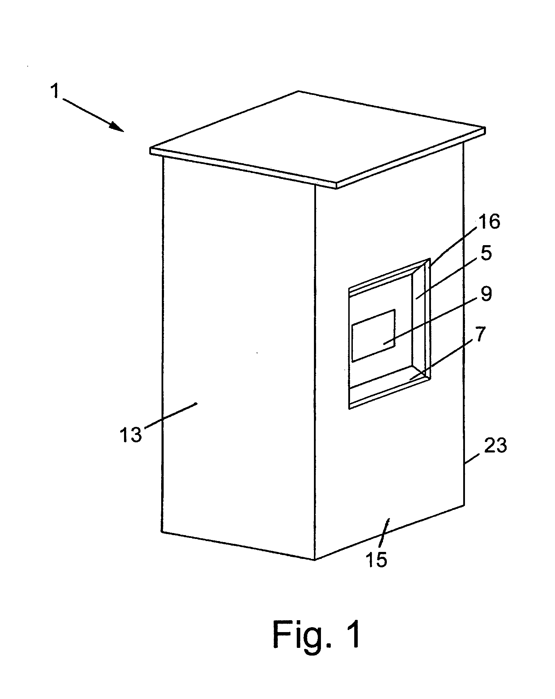

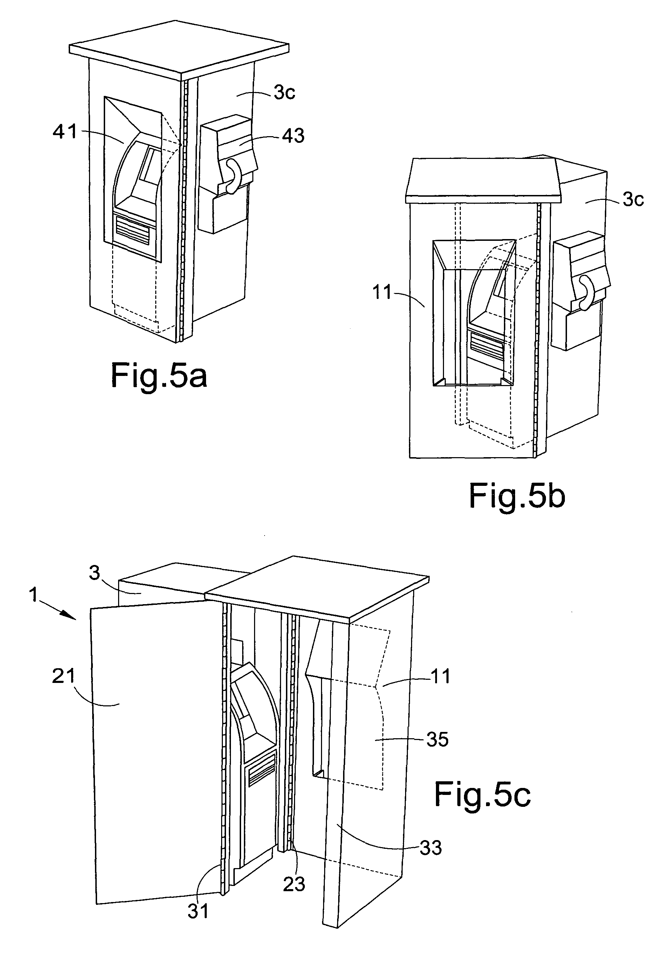

Figure 1 shows a free standing A.T.M. 1 which can be installed as a piece of street furniture. To eliminate the need to provide new amenities to the site of the A.T.M., the A.T.M. is located close to or in place of an existing public telephone, which will have electricity and POTS supplies. Such public telephones are commonly located in areas of the public thoroughfare which are frequented by a large number of people which will deter potential thieves and allow easy detection by passers-by in the case of an attempted theft. If an A.T.M. is located in such a public place then individuals looking for an A.T.M. will be able to find one more quickly, which will increase the usage of the A.T.M. and the revenue of the operator of the A.T.M. As a communication link is present, the public telephone facility can be maintained in addition to the A.T.M., and a telephone could be mounted on one of the sides of the A.T.M. kiosk, as shown in Figure 5. Such an arrangement would maximise the usage of the existing amenities which are located at the site and ensure the continued provision of telephone services in public places.

As the A.T.M. kiosk 1 is in the public thoroughfare and is free standing particular attention is required to ensure that anti-theft devices are deployed to resist uprooting the A.T.M. in an attempted robbery, and appropriate devices have been described in our previous patent applications, for example GB-A-2 366 325.

The mechanism for the A.T.M. is housed within an A.T.M. housing 3. User access is provided via an aperture 5 in the A.T.M. housing 3, from which the standard transactions can be performed with aid of a keypad 7 and a visual display unit 9.

Mounted on the enclosure 3 are walls 11, 21 for forming a secure enclosure in front of the A.T.M. When the supply of bank notes in the A.T.M. 1 is replenished, the secure enclosure is formed around the area in front of the A.T.M. In this embodiment, the secure enclosure is formed by rotating two hinged walls 11, 21 which meet at one edge and which can be securely locked together in their open position.

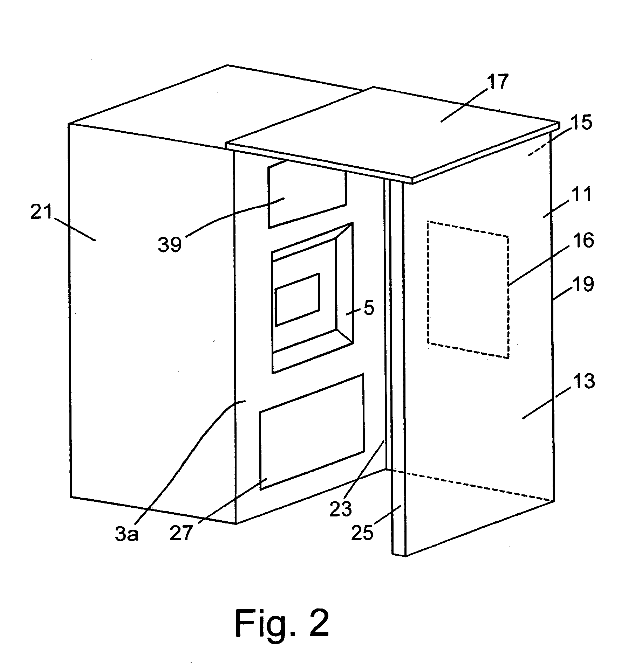

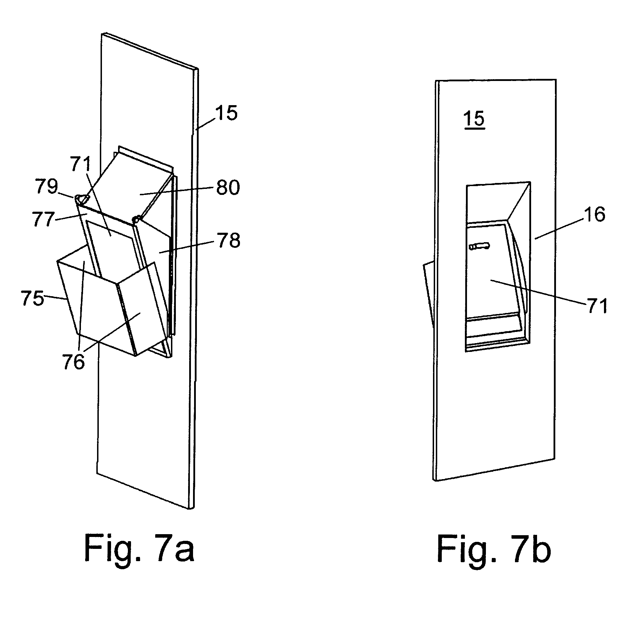

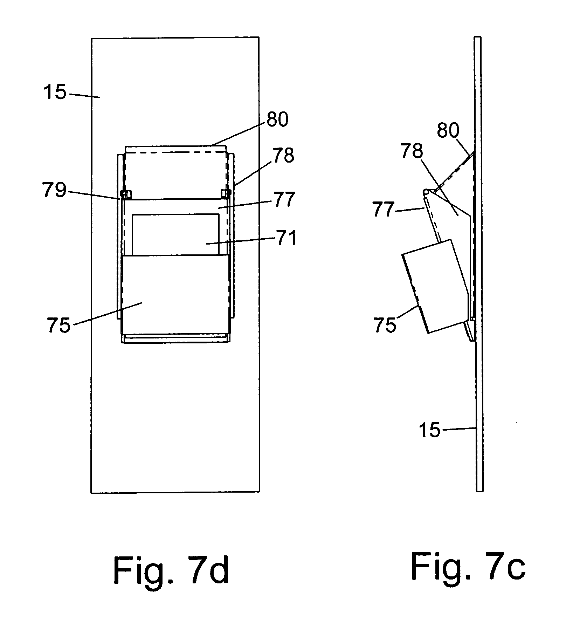

Figure 2 shows the A.T.M. of Figure 1 with a first retractable wall 11 in its open position. The second wall 21 is in a closed position, abutting the side housing wall of the A.T.M. 1. The first wall 11 is comprised of two perpendicular panels 13, 15, joined along a comer 19, and a roof 17. The roof 17 provides structural rigidity to the two panels 13, 15 and acts as a roof of the secure enclosure when the partitions walls 11, 21 are in their fully open position. The first panel 15 is attached along the length of the edge opposing the comer 19 to the housing 3 of the A.T.M. 1 by a robust hinge 23, so that the wall 11 swings out from its closed position shown in Figure 1 to the open position of Figure 2. In the closed position, panel 15 lays against the front of the A.T.M. housing and provides an access port 16 for users to access the A.T.M. In the opened out position of wall 11, the port 16 is closable by internally mounted doors (not shown); or else by a removable cash transfer unit described below with reference to Figures 7 to 10.

A flange 25 is attached to the second panel 13 along the length of the edge opposite the comer 19. This flange 25 is used to secure the enclosure when the walls 11, 21 are in their open positions, wall 21 being locked against flange 25.

When the first wall 11 is in its fully open position as shown in Figure 2, the opening of the bank note compartment 27 in the front of the A.T.M. is exposed. Hence, when the first wall 11 is in its closed position with panel 15 adjacent the front of the A.T.M. hosing front wall 3a, as shown in Figure 1, extra security is provided for this sensitive area of the A.T.M., and the exact location of the compartment 27 is hidden from view.

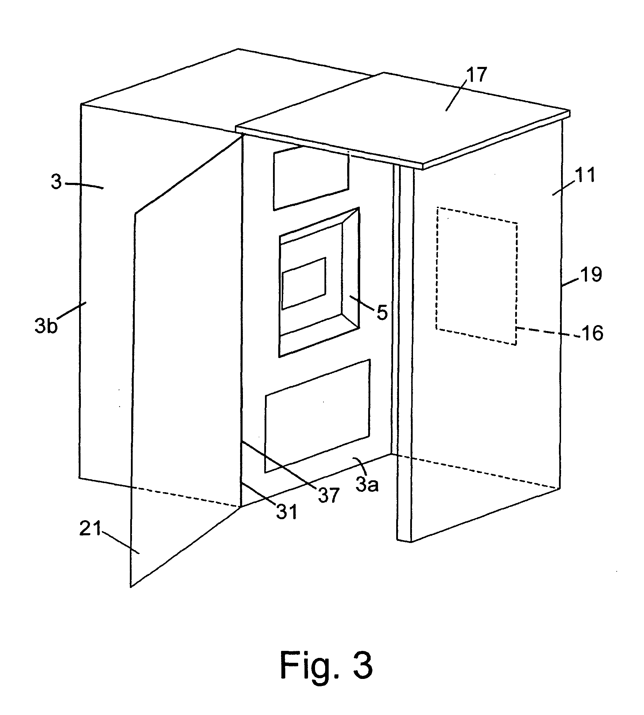

When the first wall 11 is in its fully open position as shown in Figure 2, the second wall 21 can be opened, and this is shown in a partially opened position in Figure 3. This wall 21 is connected to the A.T.M. housing 3 by a robust hinge 31 along the length of an edge 37, in a similar manner to hinge 23. In the retracted position, wall 21 lays against the side wall 3b of housing 3.

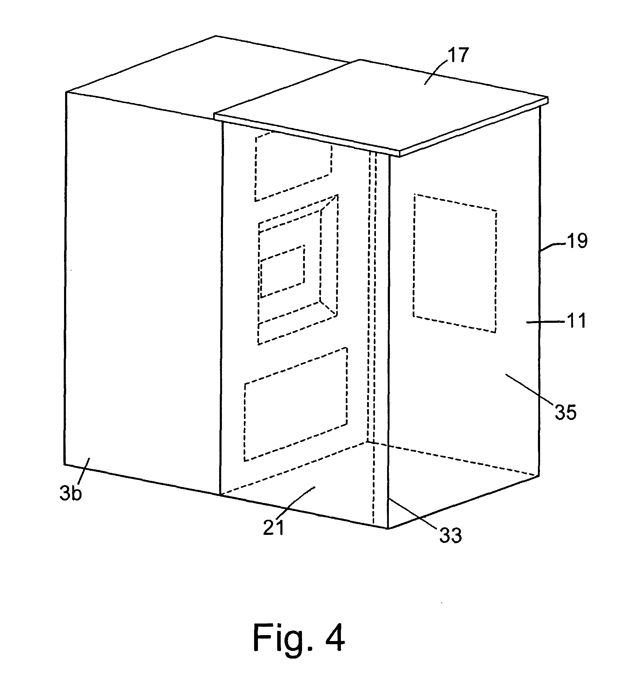

Figure 4 shows the walls 11, 21 in their fully open position. The walls 11, 21 are locked together along a common edge 33, to form a secure enclosure 35.

To provide extra security while loading bank notes into the bank note compartment 27, the walls 11, 21 are preferably of a strong, rigid material, which is preferably bullet proof.

To load bank notes into the A.T.M. 1 walls 11, 21 are swung outwards and the operative enters the space 35 and locks the walls together. The bank note compartment 27 is opened and bank notes are deposited. This is a relatively quick operation and there is sufficient space in the enclosure for the operative to stand.

To service the note handling mechanism, the bank note compartment 27 must be fully removed from the A.T.M. 1, and this normally takes longer than merely replenishing the supply of bank notes and requires more space. Therefore the technician performing the maintenance is unable to remain inside the enclosure and the second wall 21 must be kept open. Thus, we provide a secure, lockable compartment 39 above the A.T.M. mechanism in which the bank note trays can be placed after they have been removed from the bank note compartment while maintenance work is performed on the note handling mechanism. The operative stands inside the locked enclosure to remove the bank note trays and places them in the compartment 39. He then opens the enclosure, swinging sidewall 21 back and can slide out the note handling mechanism for servicing.

Figure 5a is an embodiment of the present invention showing an A.T.M. 41 in combination with a public telephone 43 which is mounted on a side wall 3c of the housing 3.. The telephone 43 and the A.T.M. 41 are located on different sides so that both can be used simultaneously and to provide some privacy to users.

Figure 5b shows this embodiment with the first wall 11 partially opened. In Figure 5c the first wall 11 is fully open and the second wall 21 is partially open. Both of the hinges 23, 31 are clearly visible in this side view.

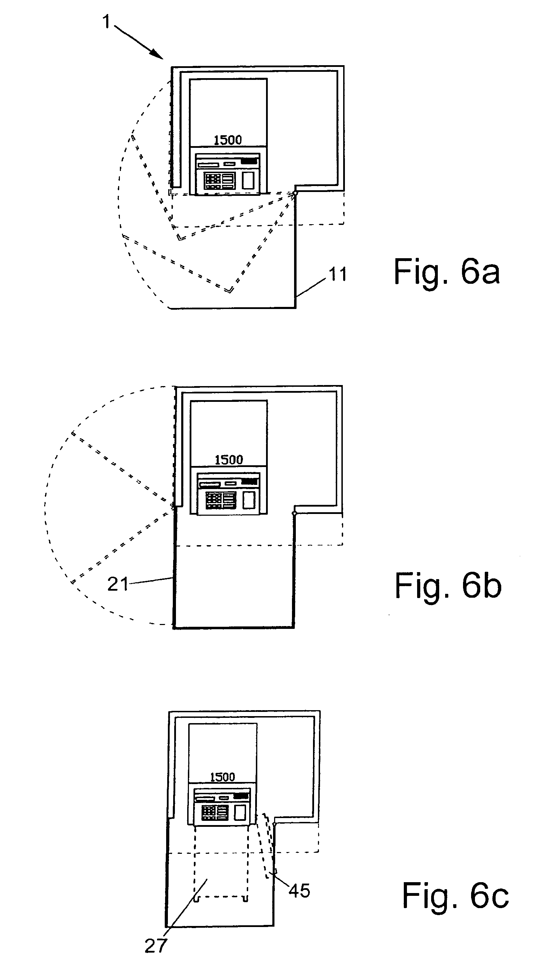

Figure 6a is a plan view of an A.T.M. kiosk 1 with the first wall 11 fully open, showing the path through which the wall 11 passes as it opens. Figure 6b is a similar plan view showing the second wall 21 fully open, showing the path through which the wall 21 passes as it opens. Figure 6c is a plan view showing the bank note compartment 27 and its door 45 in their pulled out and open positions respectively.

A cash unit will now be described with reference to Figures 7 to 10. This unit 71 to 80 is self-contained and may be stored in the body of the ATM, for example in the lockable compartment 39. When it is required in use, it is fitted over and around the port 16, i.e. the wall opening in the vertical wall 11 which divides the secure enclosure from the outside. The purpose of the cash transfer unit is to make the port 16 secure when the operative is working inside the secure enclosure, but to allow him to receive delivery of a succession of cash cassettes containing bank notes, from a delivery vehicle or otherwise. Such cash cassettes are generally box shaped, with their larger dimensions corresponding approximately to a hinged flap 71 shown in Figure 7. The dimensions are slightly smaller, so that the cash cassette may be inserted through an access opening in a frame 77 described below.

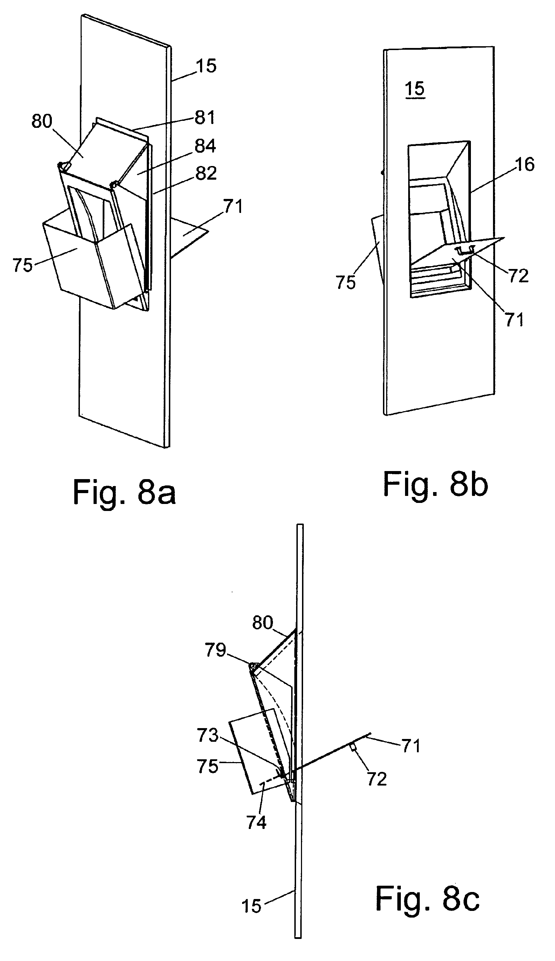

The cash transfer unit comprises a secure enclosure in the form of a hollow prism with its major rectangular front surface secured around the edge of the port 16 in the vertical wall 15. The wall 15 is preferably provided with flanges or rails (not shown) for securing the cash transfer unit removably. Peripheral flanges 81, 82 shown in Figure 8a on the edge of the secure enclosure then cooperate with corresponding formations around the edge of the port 16, allowing the cash transfer unit to be fitted by sliding it vertically downwards into position, at which it may be locked by means not shown.

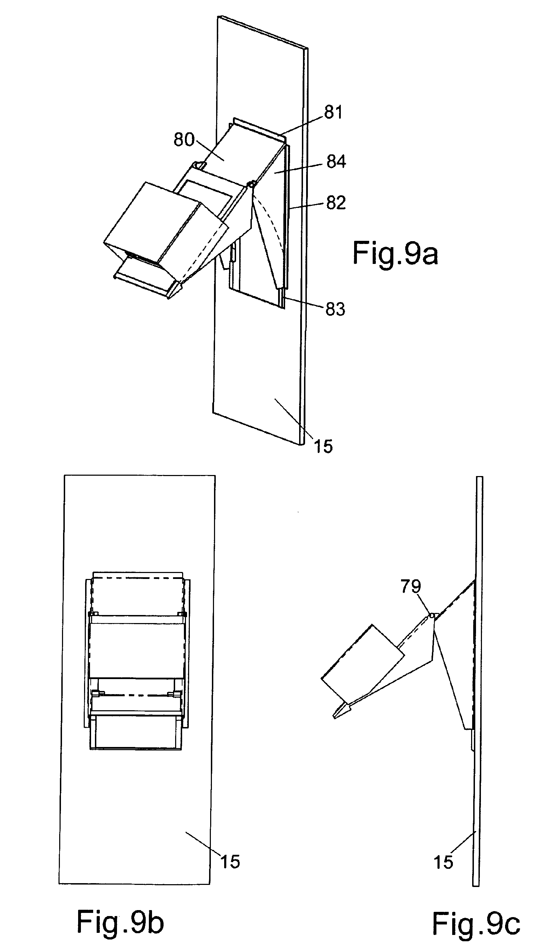

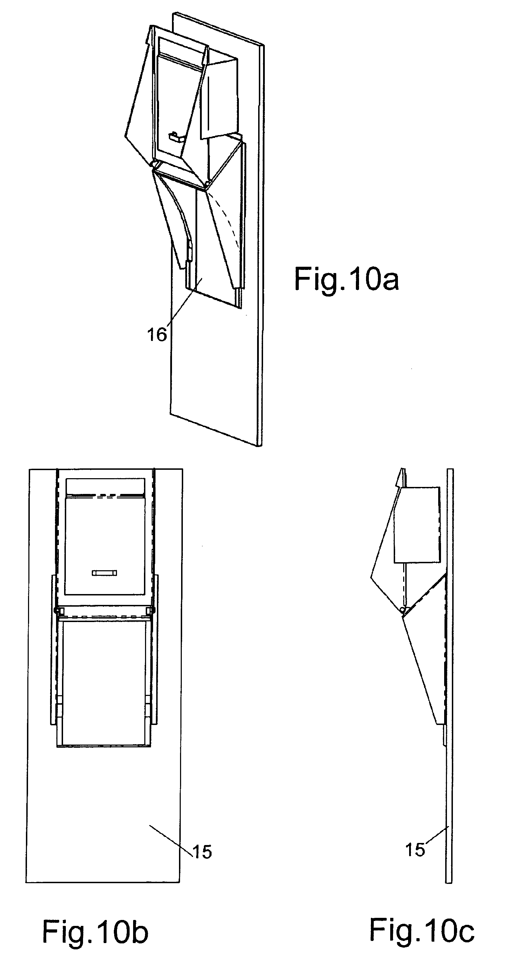

The secure enclosure comprises a fixed housing which consists of an upper square wall 80 and two triangular side walls 84. Its upper wall 80 is inclined to the horizontal at about 45°, and the housing has a rear facing rectangular opening inclined to the vertical at about 30°, as shown in Figure 7c. Flanges on the housing 80, 84 support a pair of hinges 79 which provide a horizontal pivot axis for a hood 77, 78. The hood has two stable positions: a lower position as shown in Figure 7, at which it closes the housing and forms the secure enclosure; and a fully raised position, swung through about a half turn, shown in Figure 10, which opens the enclosure and allows access freely through the port 16. An intermediate position of the hood is shown in Figure 9. The hood is lockable in its fully lowered, secure position shown in Figure 7, by locking means not shown.

The pivot axis 79 is to the rear of the front face of the secure enclosure, so that the flap may reach the stable position shown in Figure 10 without interfering with the vertical wall.

The hood has two triangular side walls 78 which cooperate closely with the side walls 84 of the housing, and a rear rectangular frame 77 which defines an access aperture. To the rear of the frame 77 is mounted a channel shaped chute having side walls 76 parallel and joined to the side walls 78, and a rectangular rear wall parallel to the frame 77. The rear wall 75 is spaced from the hood by a distance slightly greater than the width of a standard cash cassette, so that the cassette may be received into the chute and may then pass entirely through the access aperture through frame 77. The chute is open to the top and bottom, to allow a cash cassette to drop downwardly.

The access opening in the frame 77 is closable by a flap 71 which is essentially a rectangular plate hinged at the horizontal pivot axis 73 shown in Figure 8c, close to the lower edge of the access aperture, at a line approximately a quarter of the way up from its lower edge. This defines a minor portion 74 below and a major portion above the axis 73. The minor portion 74 can temporarily act as a stop for the cash cassette loaded into the chute, to prevent it falling from the chute until the flap 71 is closed. The flap 71 has a handle 72 on its front face, for access by an operative standing outside the enclosure. The arrangement is such that the weight of a cash cassette resting on the minor portion 74 is sufficient to cause the flap 71 to rise to its closed, stable position, once the handle 72 is released. The cash cassette is then free to drop down the chute 75, when it is directed forwardly towards the inside surface of the wall 15.

Once the cash transfer unit is installed as shown in Figure 7, it may be used as follows. An operative standing outside pulls open the flap 71 and inserts a cash cassette, which drops through the access aperture and lodges in the chute, resting on the minor portion 74 of the flap, and blocking access through the aperture. The operative then releases the flap which returns upwardly, past the vertical position to the inclined position shown in Figure 7. The cash cassette then drops to the floor adjacent the inner surface of the vertical wall 15, allowing an operative inside the ATM enclosure or kiosk to collect the cassette and load it into the ATM. The procedure may then be repeated for further cash cassettes. The procedure may also be carried out in reverse, with cash cassettes being taken away through the port 16, either with the hood secured down, or else with the hood raised. The operative outside may then leave, to allow the operative inside to complete the work with the ATM. When the operative inside has finished, he may remove the cash transfer unit, replace it in storage, and then close down the ATM enclosure as described above.

Various modifications will be apparent to those in the art. For example, wall 21 may be slid linearly outwards. The walls 11, 21 may be fixed into a U-shape, which is slid away from the front of the A.T.M. machine, a doorway being provided in one of the walls. It is desired to include all such modifications as fall within the scope of the accompanying claims.

## Claims

1. A method of installing an automated teller machine (A.T.M.) comprising locating a public telephone site having a power supply and a communication link and installing the A.T.M. at the site.

2. A method as claimed in claim 1, comprising replacing a telephone kiosk with an A.T.M. machine.

3. A method as claimed in claim 2, wherein a public telephone is provided together with the A.T.M. machine.

4. An enclosure for an automated teller machine (A.T.M.), the enclosure being expandable to define a work space enclosure in front of the A.T.M.

5. An enclosure as claimed in claim 4, comprising a wall which is mounted for movement between a first position adjacent a front of the A.T.M. to a second position spaced from the A.T.M.

6. An enclosure as claimed in claim 5, wherein the wall is pivotably mounted to pivot about a vertical axis to one side of the A.T.M.

7. An enclosure as claimed in claim 6, wherein the wall comprises two panels connected to form an L shape, a first panel adjacent the vertical pivot overlaying a front of the A.T.,M. when in the enclosed position and the second panel laying along one side of the A.T.M. when in the closed position.

8. An enclosure as claimed in claim 7, wherein a second wall is positioned between the second panel and the A.T.M.

9. An enclosure as claimed in claim 8, wherein the second wall is pivotably mounted to pivot outwards and form the enclosure in front of the A.T.M. with the first wall

10. A retractable enclosure for an automated teller machine (A.T.M.) comprising one or more walls which are rotatably mounted on the A.T.M., wherein the walls are rotatable from a first position, when the A.T.M. is in normal use, to a second position enclosing a space in front of the A.T.M.

11. A retractable enclosure as claimed in claim 10, wherein two walls are provided.

12. A retractable enclosure as claimed in claim 11, wherein a first wall comprises a first panel and a second panel, the first panel wall is rotatably mounted on the A.T.M. by a hinge, and the second wall is attached to the first wall substantially orthogonally, and the second wall is rotatably mounted on the A.T.M. by a hinge, wherein the first panel, the second panel and the second wall each form sides of the secure enclosure and the A.T.M. forms a fourth side of the secure enclosure.

13. A retractable enclosure as claimed in any one of claims 12 or 13, wherein a roof portion is attached substantially orthogonally to one of the two walls.

14. A cash transfer unit for use in a vertical wall for the secure manual transfer of a cash cassette through the wall between operatives inside and outside the wall, comprising a secure enclosure mountable on the wall interior around an opening in the wall, to prevent access through the opening;
and a flap mounted over an access aperture in the enclosure, the flap being pivotable from the outside about an edge of the access aperture between an open position, allowing the cash cassette to be received through the access aperture, and a closed position at which it closes the access aperture.

15. A cash transfer unit according to Claim 14, comprising a channel-shaped chute mounted over the access opening on the opposite side from the flap, for receiving and guiding the cash cassette once it has emerged through the access flap.

16. A cash transfer unit according to Claim 15, in which the flap and the chute are arranged to cooperate, in use, to hold the inserted cash cassette adjacent the access aperture, thereby blocking access, until the flap is at least partially closed, when the cash cassette is allowed to drop below the cash transfer unit.

17. A cash transfer unit according to Claim 16, in which the flap is hinged horizontally to an edge of the access aperture at a line between opposed horizontal edges of the flap, whereby a minor portion of the flap below the hinge projects inwardly of the access aperture whenever the major portion is pulled outwardly, the minor portion thereby partially blocking the chute until the flap is at least partially closed.

18. A cash transfer unit according to any of Claims 14 to 17, in which the secure enclosure has a housing which is arranged to be connected, in use, to the wall around the opening, and has a rearwardly projecting hood in which the access aperture is formed in a downwardly-inclined rear wall.

19. A cash transfer unit according to Claims 15 and Claim 18, in which the chute has a rear wall parallel to the access opening and inclined to the vertical to guide the cash cassette to slide downwardly and back towards the inner surface of the vertical wall.

20. A cash transfer unit according to Claim 18 or 19, in which the hood is mounted on the enclosure for pivotal movement behind the enclosure, away from the wall opening, to allow access through the wall opening.

21. A cash transfer unit according to Claim 20, in which the hood is hinged on a horizontal axis spaced rearwardly from the portion of the housing which engages the wall opening in use, so that the hood can be swung through substantially a half-turn to a stable, raised position above the wall opening.

22. A cash transfer unit according to any of Claims 18 to 21, in which the housing is formed with edge flanges for attaching the entire cash transfer unit removably to the wall in use.

23. An enclosure for an ATM, according to any of Claims 5 to 13, in which a wall has an opening for the secure manual transfer of a cash cassette into the ATM enclosure, and a cash transfer unit according to any of Claims 14 to 22, fitted with its secure enclosure around the wall opening on the inside so that the flap is accessible from the outside.

24. A method of transferring a cash cassette into an enclosure for an ATM according to Claim 23, comprising pulling the flap open, loading the cash cassette through the access aperture and closing the flap.

25. A method according to Claim 24, in which the cash transfer unit is in accordance with Claim 15, 16 or 17, and the access aperture and the chute are slightly larger than the cash cassette.

26. A method of installing an ATM substantially as described herein with reference to Figures 1 to 6 of the accompanying drawings.

27. An enclosure for an ATM, substantially as described herein with reference to Figures 1 to 6 of the accompanying drawings.

28. A cash transfer unit, substantially as described herein with reference to Figures 7 to 10 of the accompanying drawings.

29. An enclosure for an ATM, including a cash transfer unit substantially as described herein with reference to the accompanying drawings.

30. A method of transferring a cash cassette into an enclosure for an ATM, substantially as described herein with reference to the accompanying drawings.
